(19) Europäisches Patentamt
European Patent Office
Office européen des brevets

(11) EP 4 497 763 A1

(12) EUROPEAN PATENT APPLICATION
published in accordance with Art. 153(4) EPC

(43) Date of publication:
29.01.2025 Bulletin 2025/05

(21) Application number: 23791773.7

(22) Date of filing: 13.04.2023

(51) International Patent Classification (IPC):
*C08F 6/00* (2006.01) *C08F 14/26* (2006.01)

(52) Cooperative Patent Classification (CPC):
C08F 6/00; C08F 14/26

(86) International application number:
PCT/JP2023/014951

(87) International publication number:
WO 2023/204125 (26.10.2023 Gazette 2023/43)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 18.04.2022 JP 2022068411

(71) Applicant: DAIKIN INDUSTRIES, LTD.
Osaka-shi, Osaka 530-0001 (JP)

(72) Inventors:
- IGUCHI, Chisato
  Osaka-Shi, Osaka 530-0001 (JP)
- KUBOCHI, Masaki
  Osaka-Shi, Osaka 530-0001 (JP)
- MASUDA, Eiji
  Osaka-Shi, Osaka 530-0001 (JP)
- TSUJI, Masayuki
  Osaka-Shi, Osaka 530-0001 (JP)
- HIROMOTO, Jirou
  Osaka-Shi, Osaka 530-0001 (JP)

(74) Representative: Hoffmann Eitle
Patent- und Rechtsanwälte PartmbB
Arabellastraße 30
81925 München (DE)

# (54) METHOD FOR PRODUCING REFINED POLYTETRAFLUOROETHYLENE POWDER, AND LOW-MOLECULAR-WEIGHT POLYTETRAFLUOROETHYLENE POWDER

(57) The disclosure aims to provide a method for producing a refined polytetrafluoroethylene powder, in which a short-chain fluorine compound is reduced from low-molecular-weight polytetrafluoroethylene. The disclosure relates to a method for producing a refined polytetrafluoroethylene powder, including a step of reducing a short-chain fluorine compound from a low-molecular weight polytetrafluoroethylene powder obtained by radical polymerization. The step includes at least reducing a compound represented by the following formula (1) to 179 ppb or less and a compound represented by the following formula (2) to 6900 ppb or less:

Formula (1): $(H-(CF_2)_m-COO)_pM^1$

wherein m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (2) : $(H-(CF_2)_n-SO_3)_qM^2$

wherein n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

EP 4 497 763 A1

## Description

### TECHNICAL FIELD

The disclosure relates to methods for producing refined polytetrafluoroethylene powders and low-molecular-weight polytetrafluoroethylene powders.

### BACKGROUND ART

Low-molecular-weight polytetrafluoroethylene having a molecular weight of several thousands to several hundreds of thousands (also referred to as "polytetrafluoroethylene wax" or "polytetrafluoroethylene micropowder") has excellent chemical stability and significantly low surface energy, as well as low fibrillatability. Thus, it is used as an additive for improving lubricity and the texture of a coating surface in the production of plastics, ink, cosmetics, coating materials, greases, and the like (see Patent Literature 1, for example).

Known production methods of low-molecular-weight polytetrafluoroethylene include, for example, polymerization, radiation decomposition, and pyrolysis.

### CITATION LIST

- Patent Literature

Patent Literature 1: JP H10-147617 A
Patent Literature 2: WO 2020/218622

### SUMMARY OF INVENTION

- Technical Problem

Low-molecular-weight polytetrafluoroethylene is used as an additive in applications such as semiconductors. Therefore, in low-molecular-weight polytetrafluoroethylene, the amounts of substances other than low-molecular-weight polytetrafluoroethylene are preferably as small as possible. Patent Literature 2 includes a description about low-molecular-weight polytetrafluoroethylene in [0407] in which, however, reduction of a short-chain fluorine compound from low-molecular weight polytetrafluoroethylene is not described in detail.

The disclosure aims to provide a method for producing a refined polytetrafluoroethylene powder, including reducing a short-chain fluorine compound from low-molecular-weight polytetrafluoroethylene.

The disclosure also aims to provide a low-molecular-weight polytetrafluoroethylene powder in which the amount of a specific fluorine compound is small.

- Solution to Problem

Disclosure (1)

A method for producing a refined polytetrafluoroethylene powder, including a step of reducing a short-chain fluorine compound from a low-molecular weight polytetrafluoroethylene powder obtained by radical polymerization, the step including at least reducing a compound represented by the following formula (1) to 179 ppb or less and a compound represented by the following formula (2) to 6900 ppb or less (hereafter, also referred to as "production method of the disclosure").

Formula (1): $(H-(CF_2)_m-COO)_pM^1$

In the formula, m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

Formula (2) : $(H-(CF_2)_n-SO_3)_qM^2$

In the formula, n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

Disclosure (2)

The method for producing a refined polytetrafluoroethylene powder according to Disclosure (1), wherein the radical polymerization includes use of a fluorosurfactant other than perfluorooctanoic acid and its salt.

Disclosure (3)

The method for producing a refined polytetrafluoroethylene powder according to Disclosure (1) or (2), wherein the radical polymerization includes use of a hydrocarbon chain transfer agent.

Disclosure (4)

The method for producing a refined polytetrafluoroethylene powder according to any one of Disclosures (1) to (3), wherein the radical polymerization is emulsion polymerization.

Disclosure (5)

The method for producing a refined polytetrafluoroethylene powder according to any one of Disclosures (1) to (4), wherein the short-chain fluorine compound is reduced by heating at 170°C or higher.

Disclosure (6)

The method for producing a refined polytetrafluoroethylene powder according to any one of Disclosures (1) to (5), wherein the low-molecular-weight polytetrafluoroethylene powder has a melt viscosity of $1 \times 10^2$ to $7 \times 10^5$ Pa·s at 380°C.

Disclosure (7)

The method for producing a refined polytetrafluoroethylene powder according to any one of Disclosures (1) to (6), wherein the step further includes reducing a perfluorocarboxylic acid and its salt to below a quantitation limit.

Disclosure (8)

The method for producing a refined polytetrafluoroethylene powder according to Disclosure (7), wherein the perfluorocarboxylic acid is a perfluorocarboxylic acid other than perfluorooctanoic acid.

Disclosure (9)

A low-molecular-weight polytetrafluoroethylene powder having an intensity of a peak at a g value of 2.0218 of 0 $g^{-1}$ or more and 7 $g^{-1}$ or less in a primary differential spectrum obtainable by electron spin resonance, wherein an amount of a perfluorocarboxylic acid and its salt is below a quantitation limit, an amount of a compound represented by the following formula (1) is 179 ppb or less, and an amount of a compound represented by the following formula (2) is 6900 ppb or less (hereafter, also referred to as "low-molecular-weight polytetrafluoroethylene powder of the disclosure").

Formula (1): $(H\text{-}(CF_2)_m\text{-}COO)_pM^1$

In the formula, m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

Formula (2) : $(H\text{-}(CF_2)_n\text{-}SO_3)_qM^2$

In the formula, n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

Disclosure (10)

The low-molecular-weight polytetrafluoroethylene powder according to Disclosure (9), wherein the low-molecular-weight polytetrafluoroethylene powder has an average particle size of 20 um or smaller and an apparent density of 0.6 g/ml or lower.

Disclosure (11)

The low-molecular-weight polytetrafluoroethylene powder according to Disclosure (9) or (10), wherein the low-molecular-weight polytetrafluoroethylene powder has a melt viscosity of $1 \times 10^2$ to $7 \times 10^5$ Pa-s at 380°C.

- Advantageous Effects of Invention

The production method of the disclosure can provide a refined polytetrafluoroethylene powder in which a short-chain fluorine compound is reduced.

In the low-molecular-weight polytetrafluoroethylene powder of the disclosure, the amount of a specific fluorine compound is small.

DESCRIPTION OF EMBODIMENTS

(Production method of the disclosure)

The production method of the disclosure includes a step of reducing a short-chain fluorine compound from a low-molecular-weight polytetrafluoroethylene (low-molecular-weight PTFE) powder obtained by radical polymerization.

In the production method of the disclosure, a low-molecular-weight PTFE powder is obtained by radical polymerization.

Polymerization for obtaining low-molecular-weight PTFE in the production method of the disclosure may be performed by a combination of radical polymerization and a different polymerization method. Still, it is preferably performed by radical polymerization alone. This can simplify the production process.

Examples of the radical polymerization include emulsion polymerization, suspension polymerization, and bulk polymerization. Preferred is emulsion polymerization.

In the emulsion polymerization, a polymerization reaction of tetrafluoroethylene is typically performed in an aqueous medium in the presence of a fluorosurfactant and a chain transfer agent. The polymerization reaction may be performed by any method under any conditions, and any conventionally known method may be used.

The fluorosurfactant is a compound that contains at least one fluorine atom in the molecular structure and shows surface activity. A practical example of the fluorosurfactant is one containing: a C2-C7 hydrocarbon in which at least one hydrogen atom is replaced by a fluorine atom; and a hydrophilic group such as a carboxylic acid, a carboxylate salt, a sulfonic acid, or a sulfonic acid group.

The fluorosurfactant is preferably other than perfluorooctanoic acid and its salt.

The aqueous medium is preferably deionized, high purity water. The aqueous medium may contain an organic solvent such as alcohol, ether, ketone, or paraffin wax.

Examples of the chain transfer agent include hydrogen, a hydrocarbon, and a halogenated hydrocarbon.

When a hydrocarbon chain transfer agent such as a hydrocarbon or a halogenated hydrocarbon is used, a short-chain fluorine compound is generated as described above. The production method of the disclosure includes a step of reducing a short-chain fluorine compound. This enables reduction of the short-chain fluorine compound in low-molecular-weight PTFE even when a hydrocarbon chain transfer agent is used.

Examples of the hydrocarbon chain transfer agent include a C1-C3 hydrocarbon and a C1-C3 halogenated hydrocarbon. Examples of the C1-C3 hydrocarbon include methane, ethane, and propane. Examples of the C1-C3 halogenated hydrocarbon include chloromethane and chloroethane. Preferred among these are ethane and propane.

The amount of the chain transfer agent added cannot be generally specified as the range of the appropriate amount depends on the polymerization conditions such as the chain transfer ability of the agent, the reaction temperature, the polymerization pressure, and the amount of the polymerization initiator added. Still, the amount is preferably 0.2 to 20 mol%, more preferably 1.0 to 10 mol% relative to TFE present in the reaction system.

The low-molecular-weight PTFE powder is typically a TFE polymer having a number average molecular weight of 600000 or less. High-molecular-weight PTFE powder having a number average molecular weight exceeding 600000 exhibits a fibrillation property, which is unique to PTFE (see Patent Literature 1). Particles of such PTFE are likely to agglomerate when used as an additive and tend to show poor dispersibility in a matrix material.

The low-molecular-weight PTFE powder is preferably a TFE polymer having a melt viscosity of $1 \times 10^2$ to $7 \times 10^5$

(Pa·s) at 380°C. The low-molecular-weight PTFE powder having a melt viscosity within the above range normally has a number average molecular weight of 600000 or less (see Patent Literature 1).

The high-molecular-weight PTFE powder is different from the low-molecular-weight PTFE powder in that it is normally non melt-processible and the melt viscosity is not measurable.

The melt viscosity is a value determined by heating a 2-g sample at 380°C for five minutes in advance and then keeping the sample at this temperature under a load of 0.7 MPa using a flow tester (available from Shimadzu Corp.) and a 2φ-8L die in conformity with ASTM D1238. The number average molecular weight is a value calculated from the melt viscosity determined by the above measurement method.

PTFE constituting the low-molecular-weight PTFE powder may be a tetrafluoroethylene homopolymer (TFE homopolymer) or a modified polytetrafluoroethylene (modified PTFE).

The TFE homopolymer is obtainable by polymerization of tetrafluoroethylene (TFE) alone as a monomer.

The modified PTFE means a polymer obtainable by copolymerization of TFE with a modifying monomer copolymerizable with TFE.

The modifying monomer in the modified PTFE may be any monomer copolymerizable with TFE. Examples thereof include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride; perfluorovinyl ethers; perfluorobutyl ethylene; and ethylene. One modifying monomer may be used or a plurality of modifying monomers may be used.

The perfluorovinyl ether may be, but is not limited to, an unsaturated perfluoro compound represented by the following formula (X):

$$CF_2=CF\text{-}ORf \qquad (X)$$

wherein Rf is a perfluoroorganic group. The term "perfluoro organic group" herein means an organic group in which all hydrogen atoms bonded to any carbon atom are replaced by fluorine atoms. The perfluoroorganic group may have an ether oxygen.

Examples of the perfluorovinyl ether include a perfluoro(alkyl vinyl ether) (PAVE) represented by the formula (X) in which Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) in which the perfluoroalkyl group is a perfluoropropyl group.

Examples of the perfluorovinyl ether also include:

those represented by the formula (X) wherein Rf is a C4-C9 perfluoro(alkoxy alkyl) group;
those represented by the formula (X) wherein Rf is a group represented by the following formula:

[Chem. 1]

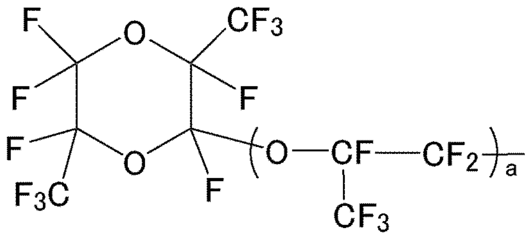

wherein a is 0 or an integer of 1 to 4; and
those represented by the formula (X) wherein Rf is a group represented by the following formula:

[Chem. 2]

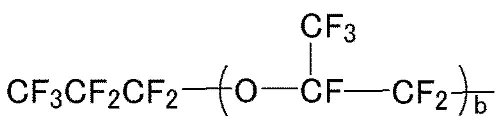

wherein b is an integer of 1 to 4.

Non-limiting examples of perluoroalkyl ethylenes include perluorobutyl ethylene (PFBE), perfluorohexyl ethylene (PFHE), and perfluorooctyl ethylene (PFOE).

The modifying monomer in the modified PTFE preferably includes at least one selected from the group consisting of HFP, CTFE, VDF, PMVE, PPVE, PFBE, PFHE, CNVE, and ethylene.

The modified PTFE preferably contains a modifying monomer unit in an amount within a range of 0.0001 to 2 mol%, more preferably within a range of 0.0001 mol% to less than 1 mol%, still more preferably within a range of 0.0001 to 0.5 mol%, particularly preferably within a range of 0.001 to 0.2 mol%.

The step in the production method of the disclosure at least includes reducing a compound represented by the following formula (1) to 179 ppb or less (preferably 120 ppb or less, more preferably 70 ppb or less, still more preferably 40 ppb or less, particularly preferably below the quantitation limit) and reducing a compound represented by the following formula (2) to 6900 ppb or less (preferably 2500 ppb or less, more preferably 2000 ppb or less, still more preferably below the quantitation limit). These amounts are all on a mass basis.

Formula (1): $(H\text{-}(CF_2)_m\text{-}COO)_pM^1$

In the formula, m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2.

Formula (2) : $(H\text{-}(CF_2)_n\text{-}SO_3)_qM^2$

In the formula, n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

An example of a method for reducing a short-chain fluorine compound such as the compound represented by the formula (1) and the compound represented by the formula (2) is a method including heating the low-molecular-weight PTFE powder.

The heating may be performed by any method, and examples thereof include use of a device such as a box dryer, a band dryer, a tunnel dryer, a nozzle jet dryer, a moving bed dryer, a rotary dryer, a fluidized bed dryer, a pneumatic conveying dryer, a box dryer, a disk dryer, a cylindrical stirring dryer, an inverted conical stirring dryer, a microwave device, a vacuum heat treatment device, a box electric furnace, a hot air circulating device, a flash dryer, a vibrating dryer, a belt dryer, an extrusion dryer, or a spray dryer.

The heating may be performed either on a wet PTFE powder containing moisture, which is obtained from a PTFE dispersion after polymerization, or on a dried PTFE powder.

The heating temperature in the heating is preferably 170°C or higher from the standpoint of the efficiency of reducing a short-chain fluorine compound. The lower limit is more preferably 175°C, still more preferably 180°C. The upper limit is preferably lower than the melting point of low-molecular-weight PTFE powder. The melting point of low-molecular-weight PTFE powder is typically 327°C. The upper limit is more preferably 300°C, still more preferably 240°C.

The heating time in the heating is preferably 5 to 30 hours from the standpoint of the efficiency of reducing a short-chain fluorine compound. The lower limit is more preferably 7 hours, still more preferably 10 hours. The upper limit is more preferably 25 hours, still more preferably 22 hours.

In the case where the heating is performed on the wet PTFE powder upon its drying and on the dried PTFE powder, the heating time is the sum of the individual heating times.

The heating reduces the compound represented by the formula (1) and the compound represented by the formula (2), which are short-chain fluorine compounds, from the low-molecular-weight PTFE powder.

Examples of the short-chain fluorine compound include a perfluorocarboxylic acid and its salt, in addition to the compound represented by the formula (1) and the compound represented by the formula (2). In other words, the step in the production method of the disclosure preferably further includes reducing a perfluorocarboxylic acid and its salt to below the quantitation limit.

The perfluorocarboxylic acid preferably has a carbon number of 4 to 14.

The perfluorocarboxylic acid may be either perfluorooctanoic acid or a perfluorocarboxylic acid other than perfluorooctanoic acid. Preferred is perfluorooctanoic acid.

Examples of the metal atom in the formulas (1) and (2) include monovalent or divalent metal atoms. The examples more specifically include alkali metals (Group 1) and alkaline earth metals (Group 2). Specific examples thereof include Na, K, and Li.

Four $R^5$s in each of the formulas (1) and (2) may be the same as or different from each other. $R^5$ is preferably H or a C1-C10 organic group, more preferably H or a C1-C4 organic group. $R^5$ is preferably a C1-C10 alkyl group, still more preferably a C1-C4 alkyl group. The above provision can be applied to all $R^5$s described below.

In the formula (1), m may be 5 to 11.
In the formula (2), n may be 6 to 12.
The term "organic group" as used herein means a group containing one or more carbon atoms or a group formed by removing one hydrogen atom from an organic compound, unless otherwise stated.
Examples of the "organic group" include

an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing one or more substituents,
a heteroaryl group optionally containing one or more substituents,
a cyano group,
a formyl group,
RaO-,
RaCO-,
$RaSo_2$-,
RaCOO-,
RaNRaCO-,
RaCONRa-,
RaOCO-, and
$RaOSO_2$-,
wherein Ras are each independently
an alkyl group optionally containing one or more substituents,
an alkenyl group optionally containing one or more substituents,
an alkynyl group optionally containing one or more substituents,
a cycloalkyl group optionally containing one or more substituents,
a cycloalkenyl group optionally containing one or more substituents,
a cycloalkadienyl group optionally containing one or more substituents,
an aryl group optionally containing one or more substituents,
an aralkyl group optionally containing one or more substituents,
a non-aromatic heterocyclic group optionally containing one or more substituents, or
a heteroaryl group optionally containing one or more substituents.

The organic group is preferably an alkyl group optionally containing one or more substituents.
Examples of the organic group also include those listed below as examples of the substituent.
The term "substituent" as used herein means a group that can substitute for an atom or group, unless otherwise stated. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.
The aliphatic group may be either saturated or unsaturated, and may contain a group such as a hydroxy group, an aliphatic oxy group, a carbamoyl group, an aliphatic oxycarbonyl group, an aliphatic thio group, an amino group, an aliphatic amino group, an acylamino group, or a carbamoylamino group. An example of the aliphatic group is an alkyl group having a total carbon number of 1 to 8 (preferably 1 to 4). Specific examples thereof include a methyl group, an ethyl group, a vinyl group, a cyclohexyl group, and a carbamoylmethyl group.
The aromatic group may contain, for example, a nitro group, a halogen atom, an aliphatic oxy group, a carbamoyl

group, an aliphatic oxycarbonyl group, an aliphatic thio group, an amino group, an aliphatic amino group, an acylamino group, or a carbamoylamino group. An example of the aromatic group is an aryl group having a total carbon number of 6 to 12 (preferably 6 to 10). Specific examples thereof include a phenyl group, a 4-nitrophenyl group, a 4-acetylaminophenyl group, and a 4-methanesulfonylphenyl group.

The heterocyclic group may contain, for example, a halogen atom, a hydroxy group, an aliphatic oxy group, a carbamoyl group, an aliphatic oxycarbonyl group, an aliphatic thio group, an amino group, an aliphatic amino group, an acylamino group, or a carbamoylamino group. An example of the heterocyclic group is a 5- to 6-membered hetero ring having a total carbon number of 2 to 12 (preferably 2 to 10). Specific examples thereof include a 2-tetrahydrofuryl group and a 2-pyrimidyl group.

The acyl group may contain, for example, an aliphatic carbonyl group, an aryl carbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, or a carbamoylamino group. An example of the acyl group is an acyl group having a total carbon number of 2 to 8 (preferably 2 to 4). Specific examples thereof include an acetyl group, a propanoyl group, a benzoyl group, and a 3-pyridinecarbonyl group.

The acylamino group may contain a group such as an aliphatic group, an aromatic group, or a heterocyclic group, and may contain, more specifically, an acetylamino group, a benzoylamino group, a 2-pyridinecarbonylamino group, or a propanoylamino group. Examples of the acylamino group include an acylamino group having a total carbon number of 2 to 12 (preferably 2 to 8) and an alkylcarbonylamino group having a total carbon number of 2 to 8. Specific examples thereof include an acetylamino group, a benzoylamino group, a 2-pyridinecarbonylamino group, and a propanoylamino group.

The aliphatic oxycarbonyl group may be either saturated or unsaturated, and may contain a group such as a hydroxy group, an aliphatic oxy group, a carbamoyl group, an aliphatic oxycarbonyl group, an aliphatic thio group, an amino group, an aliphatic amino group, an acylamino group, or a carbamoylamino group. An example of the aliphatic oxycarbonyl group is an alkoxycarbonyl group having a total carbon number of 2 to 8 (preferably 2 to 4). Specific examples thereof include a methoxycarbonyl group, an ethoxycarbonyl group, and a (t)-butoxycarbonyl group.

The carbamoyl group may contain a group such as an aliphatic group, an aromatic group, or a heterocyclic group. Examples of the carbamoyl group include an unsubstituted carbamoyl group and an alkylcarbamoyl group having a total carbon number of 2 to 9. Preferred are an unsubstituted carbamoyl group and an alkylcarbamoyl group having a total carbon number of 2 to 5. Specific examples of the alkylcarbamoyl group include a N-methylcarbamoyl group, a N,N-dimethylcarbamoyl group, and a N-phenylcarbamoyl group.

The aliphatic sulfonyl group may be either saturated or unsaturated, and may contain a group such as a hydroxy group, an aromatic group, an aliphatic oxy group, a carbamoyl group, an aliphatic oxycarbonyl group, an aliphatic thio group, an amino group, an aliphatic amino group, an acylamino group, or a carbamoylamino group. An example of the aliphatic sulfonyl group is an alkyl sulfonyl group having a total carbon number of 1 to 6 (preferably 1 to 4). A specific example thereof is a methanesulfonyl group.

The aromatic sulfonyl group may contain a group such as a hydroxy group, an aliphatic group, an aliphatic oxy group, a carbamoyl group, an aliphatic oxycarbonyl group, an aliphatic thio group, an amino group, an aliphatic amino group, an acylamino group, or a carbamoylamino group. An example of the aromatic sulfonyl group is an aryl sulfonyl group having a total carbon number of 6 to 10. A specific example thereof is a benzenesulfonyl group.

The amino group may contain a group such as an aliphatic group, an aromatic group, or a heterocyclic group.

The acylamino group may contain a group such as an acetylamino group, a benzoylamino group, a 2-pyridinecarbonylamino group, or a propanoylamino group. An example of the acylamino group is an acylamino group having a total carbon number of 2 to 12 (preferably 2 to 8). The acylamino group is preferably an alkylcarbonylamino group having a total carbon number of 2 to 8. Specific examples thereof include an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, and a 2-pyridinesulfonamide group.

The sulfamoyl group may contain a group such as an aliphatic group, an aromatic group, or a heterocyclic group. Examples of the sulfamoyl group include a sulfamoyl group, an alkylsulfamoyl group having a total carbon number of 1 to 9, a dialkylsulfamoyl group having a total carbon number of 2 to 10, an aryl sulfamoyl group having a total carbon number of 7 to 13, and a heterocyclic sulfamoyl group having a total carbon number of 2 to 12. Preferred are a sulfamoyl group, an alkylsulfamoyl group having a total carbon number of 1 to 7, a dialkylsulfamoyl group having a total carbon number of 3 to 6, an aryl sulfamoyl group having a total carbon number of 6 to 11, and a heterocyclic sulfamoyl group having a total carbon number of 2 to 10. Specific examples thereof include a sulfamoyl group, a methylsulfamoyl group, a N,N-dimethylsulfamoyl group, a phenylsulfamoyl group, and a 4-pyridinesulfamoyl group.

The aliphatic oxy group may be either saturated or unsaturated, and may contain a group such as a methoxy group, an ethoxy group, an i-propyloxy group, a cyclohexyloxy group, or a methoxyethoxy group. An example of the aliphatic oxy group is an alkoxy group having a total carbon number of 1 to 8 (preferably 1 to 6). Specific examples thereof

include a methoxy group, an ethoxy group, an i-propyloxy group, a cyclohexyloxy group, and a methoxyethoxy group.

The aromatic amino group and the heterocyclic amino group may each contain an aliphatic group, an aliphatic oxy group, a halogen atom, a carbamoyl group, a heterocyclic group fused with the aryl group, an aliphatic oxycarbonyl group, or the like, and preferably each contain an aliphatic group having a total carbon number of 1 to 4, an aliphatic oxy group having a total carbon number of 1 to 4, a halogen atom, a carbamoyl group having a total carbon number of 1 to 4, a nitro group, or an aliphatic oxycarbonyl group having a total carbon number of 2 to 4.

The aliphatic thio group may be either saturated or unsaturated, and it may be, for example, an alkylthio group having a total carbon number of 1 to 8 (preferably 1 to 6). Specific examples thereof include a methylthio group, an ethylthio group, a carbamoylmethylthio group, and a t-butylthio group.

The carbamoylamino group may contain a group such as an aliphatic group, an aryl group, or a heterocyclic group. Examples of the carbamoylamino group include a carbamoylamino group, an alkylcarbamoylamino group having a total carbon number of 2 to 9, a dialkylcarbamoylamino group having a total carbon number of 3 to 10, an arylcarbamoylamino group having a total carbon number of 7 to 13, and a heterocyclic carbamoylamino group having a total carbon number of 3 to 12. Preferred are a carbamoylamino group, an alkylcarbamoylamino group having a total carbon number of 2 to 7, a dialkylcarbamoylamino group having a total carbon number of 3 to 6, an arylcarbamoylamino group having a total carbon number of 7 to 11, and a heterocyclic carbamoylamino group having a total carbon number of 3 to 10. Specific examples thereof include a carbamoylamino group, a methylcarbamoylamino group, a N,N-dimethylcarbamoylamino group, a phenylcarbamoylamino group, and a 4-pyridinecarbamoylamino group.

One form of refined PTFE powder obtainable by the production method of the disclosure is the low-molecular-weight PTFE powder of the disclosure.

(Low-molecular-weight PTFE powder of the disclosure)

In the low-molecular-weight PTFE powder of the disclosure, the amount of a perfluorocarboxylic acid and its salt is below the quantitation limit, the amount of a compound represented by the formula (1) is 179 ppb or less, and the amount of a compound represented by the following formula (2) is 6900 ppb or less. The low-molecular-weight polytetrafluoroethylene powder of the disclosure has an intensity of a peak at a g value of 2.0218 of 0 $g^{-1}$ or more and 7 $g^{-1}$ or less in a primary differential spectrum obtainable by electron spin resonance.

The amount of a perfluorocarboxylic acid and its salt in the low-molecular-weight PTFE powder of the disclosure is below the quantitation limit on a mass basis. In other words, the low-molecular-weight PTFE powder of the disclosure is substantially free from a perfluorocarboxylic acid and its salt.

The quantitation limit of a perfluorocarboxylic acid and its salt is 1 ng/ml in the measurement by the method described later in EXAMPLES.

The amount of a compound represented by the formula (1) in the low-molecular-weight PTFE powder of the disclosure is 179 ppb or less on a mass basis. The lower limit is not limited and is preferably 120 ppb or less, more preferably 70 ppb or less, still more preferably 40 ppb or less, and may be below the quantitation limit. In other words, the low-molecular-weight PTFE powder of the disclosure may be substantially free from a compound represented by the formula (1).

The quantitation limit of the amount of a compound represented by the formula (1) is 1 ng/ml in the measurement by the method described later in EXAMPLES.

The amount of a compound represented by the formula (2) in the low-molecular-weight PTFE powder of the disclosure is 6900 ppb or less on a mass basis. The lower limit is not limited and is preferably 2500 ppb or less, more preferably 2000 ppb or less, and may be below the quantitation limit. In other words, the low-molecular-weight PTFE powder of the disclosure may be substantially free from a compound represented by the formula (2).

The quantitation limit of the amount of a compound represented by the formula (2) is 1 ng/ml in the measurement by the method described later in EXAMPLES.

The perfluorocarboxylic acid may be perfluorooctanoic acid or a perfluorocarboxylic acid other than perfluorooctanoic acid. Preferred is perfluorooctanoic acid.

The amounts of the perfluorocarboxylic acid and its salt, the compound represented by the formula (1), and the compound represented by the formula (2) can be measured by liquid chromatography.

The low-molecular-weight PTFE powder of the disclosure has an intensity of a peak at a g value of 2.0218 of 0 $g^{-1}$ or more and 7 $g^{-1}$ or less in a primary differential spectrum obtainable by electron spin resonance (ESR) (hereafter, also referred to as ESR spectrum).

The measurement conditions of the ESR and the definitions of related terms are described below.

The measurement conditions are listed below.

Device: JES-FR30EX available from Jeol Ltd.
Measurement temperature: 23 ± 3°C.

Microwave frequency: 9.42 GHz
Microwave output: 0.4 mW
Center field: 347.548 mT
Sweep width: ±25 mT
Sweep time: 60 s
Time constant: 0.03 s
Field modulation width: 0.32 mT
Number of scans: 1
Modulation frequency: 100 kHz
Marker: $Mn^{2+}$

In the ESR spectrum, the vertical axis expresses a corrected signal intensity and the horizontal axis expresses a g value.

The corrected signal intensity is defined by the following equation:

Corrected signal intensity ($g^{-1}$) = Int. [PTFE]/Int. [$Mn^{2+}$]/sample mass (g)

wherein "Int. [PTFE]" represents the signal intensity of the sample before correction and "Int. [$Mn^{2+}$]" represents the signal intensity of the marker.

When the term "intensity" is simply used herein in relation to the signal in the ESR spectrum of PTFE, it refers to the corrected signal intensity, unless otherwise specified.

The g value of the ESR signal is a value corrected based on the known g value 1.981 which corresponds to the fourth peak, among six peaks of $Mn^{2+}$ used as a marker, from the lower magnetic field side, and is defined by the following equation:

$$g = g_{std} - \{(B - B_{std})/B_{std}\} \times g_{std}$$

wherein $g_{std}$ represents the g value of the marker, B represents the field intensity at which the signal is obtained, and $B_{std}$ represents the field intensity of the marker.

In the ESR spectrum, a positive signal refers to a signal appearing in a positive region (upper side of the base line) of the spectrum and a negative signal refers to a signal appearing in a negative region (lower side of the base line) of the spectrum.

The linear radical (radical 1) is represented by the following formula:

[Chem. 3]

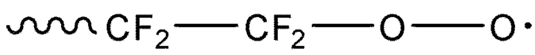

(wherein the wave line represents a polymer chain of PTFE; the same applies hereinbelow), and a side-chain radical (radical 2) is represented by the following formula:

[Chem. 4]

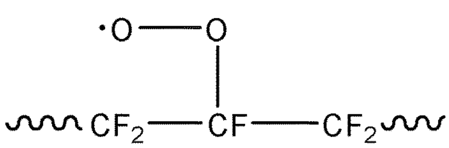

Radiation irradiation generates radical 3 represented by the following formula:

[Chem. 5]

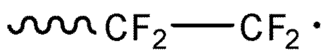

and radical 4 represented by the following formula:

[Chem. 6]

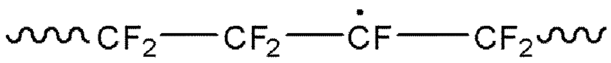

,

and these radicals are considered to generate the radical 1 and the radical 2 when brought into contact with air. The negative signal (peak) at a g value of 2.0218 is considered to be a signal based on the radical 2, and the amount of the radical 2 can be estimated from the intensity of the peak at a g value of 2.0218.

The low-molecular-weight PTFE powder of the disclosure has an intensity of a peak at a g value of 2.0218 of 0 $g^{-1}$ or more and 7 $g^{-1}$ or less in the ESR spectrum. With the intensity of the peak within this range, the amount of a side-chain radical is presumably significantly small. In other words, the low-molecular-weight PTFE powder of the disclosure may be substantially free from a side-chain radical.

In contrast, low-molecular-weight PTFE powder obtained by exposing high-molecular-weight PTFE powder to radiation normally has an intensity of a peak at a g value of 2.0218 outside the above range. Accordingly, the presence of a large amount of side-chain radical is estimated.

The low-molecular-weight PTFE powder of the disclosure preferably has an average particle size of 20 um or smaller. The lower limit of the average particle size is preferably 1 um, more preferably 2 um. The upper limit thereof is more preferably 11 um, still more preferably 10 um, further preferably 9 μm.

The average particle size is regarded as being equivalent to the particle size corresponding to 50% of the cumulative volume in the particle size distribution determined using a laser diffraction particle size distribution analyzer (HELOS & RODOS) available from Jeol Ltd. at a dispersive pressure of 3.0 bar without cascade impaction.

The low-molecular-weight PTFE powder of the disclosure preferably has an apparent density of 0.6 g/ml or lower. The lower limit of the apparent density is preferably 0.1 g/ml, more preferably 0.2 g/ml and the upper limit thereof is more preferably 0.5 g/ml.

The apparent density can be determined in conformity with JIS K6891.

The low-molecular-weight PTFE powder of the disclosure can be produced, for example, by the production method of the disclosure. The low-molecular-weight PTFE powder of the disclosure is preferably obtained by emulsion polymerization using a fluorosurfactant other than perfluorooctanoic acid and its salt.

The refined PTFE powder obtained by the production method of the disclosure and the low-molecular-weight PTFE powder of the disclosure can be suitably used, for example, as additives for modifying molding materials, ink, cosmetics, coating materials, greases, components for OA devices, and toners, and additives for plating solutions. A particularly suitable application as the additive is a thickening agent for greases.

Specific examples of the molding materials include engineering plastics such as polyoxybenzoyl polyester, polyimide, polyamide, polyamide-imide, polyacetal, polycarbonate, and polyphenylene sulfide.

When used as an additive for the molding materials, the refined PTFE powder obtainable by the production method of the disclosure and the low-molecular-weight PTFE powder of the disclosure each can be used for improving the non-stickiness/sliding property of rollers of copiers, for improving the texture of molded articles of engineering plastics, such as surface sheets of furniture, dashboards of automobiles, and covers of home appliances, and for improving the lubricity and abrasion resistance of machine elements generating mechanical friction, such as light-load bearings, gears, cams, buttons of push-button telephones, movie projectors, camera components, and sliding materials.

When used as an additive for coating materials, the refined PTFE powder obtainable by the production method of the disclosure and the low-molecular-weight PTFE powder of the disclosure each can be used for the purpose of improving the lubricity of varnish and paint.

When used as an additive for cosmetics, the refined PTFE powder obtainable by the production method of the disclosure and the low-molecular-weight PTFE powder of the disclosure each can be used for the purpose of improving the lubricity of cosmetics such as foundation.

The refined PTFE powder obtainable by the production method of the disclosure and the low-molecular-weight PTFE powder of the disclosure each can be also suitably used for improving the oil- or water-repellency of wax and for improving the lubricity of greases or toners.

The refined PTFE powder obtainable by the production method of the disclosure and the low-molecular-weight PTFE powder of the disclosure each can be also used as an electrode binder for secondary batteries or fuel cells, a hardness adjuster for electrode binders, and a water-repellent for electrode surfaces.

The refined PTFE powder obtainable by the production method of the disclosure and the low-molecular-weight PTFE powder of the disclosure each can be also combined with a lubricant oil to provide a grease. In the grease containing a lubricant oil and the refined PTFE powder or the low-molecular-weight PTFE powder, the refined PTFE powder or the low-molecular-weight PTFE powder is uniformly and stably dispersed in the lubricant oil. Such a grease is excellent in properties such as load resistance, electric insulation, and low moisture absorption.

The lubricant oil (base oil) may be either mineral oil or synthetic oil. Examples of the lubricant oil (base oil) include

paraffinic or naphthenic mineral oils, and synthetic oils such as synthetic hydrocarbon oils, ester oils, fluorine oils, and silicone oils. In terms of heat resistance, fluorine oils are preferred. Examples of the fluorine oils include perfluoropolyether oil and polychlorotrifluoroethylene with a low polymerization degree. The polychlorotrifluoroethylene with a low polymerization degree may have a weight average molecular weight of 500 to 1200.

The grease may further contain a thickening agent. Examples of the thickening agent include metal soaps, composite metal soaps, bentonite, phthalocyanin, silica gel, urea compounds, urea/urethane compounds, urethane compounds, and imide compounds. Examples of the metal soaps include sodium soap, calcium soap, aluminum soap, and lithium soap. Examples of the urea compounds, urea/urethane compounds, and urethane compounds include diurea compounds, triurea compounds, tetraurea compounds, other polyurea compounds, urea/urethane compounds, diurethane compounds, and mixtures thereof.

The total amount of the refined PTFE powder and the low-molecular-weight PTFE powder in the grease is preferably 0.1 to 50% by mass. The lower limit is more preferably 0.5% by mass and the upper limit is more preferably 30% by mass. A grease containing too large an amount of the refined PTFE powder and the low-molecular-weight PTFE powder may be too hard to exhibit sufficient lubricity. A grease containing too small an amount of the refined PTFE powder and the low-molecular-weight PTFE powder may fail to exhibit sealability.

The grease may also contain any of additives such as solid lubricants, extreme pressure agents, antioxidants, oiliness agents, anticorrosives, viscosity index improvers, and detergent dispersants.

## EXAMPLES

The disclosure is described in more detail below with reference to examples, but is not limited to these examples.

The parameters in the examples were determined by the following methods.

### <Average particle size>

The particle size corresponding to 50% of the cumulative volume in the particle size distribution determined using a laser diffraction particle size distribution analyzer (HELOS & RODOS) available from Jeol Ltd. at a dispersive pressure of 1.0 bar without cascade impaction was determined as the average particle size.

### <Apparent density>

The apparent density was determined in conformity with JIS K 6891.

### <Melt viscosity>

The melt viscosity was determined by heating a 2-g sample at 380°C for five minutes in advance and then keeping the sample at this temperature under a load of 0.7 MPa using a flow tester (available from Shimadzu Corp.) and a 2φ-8L die in conformity with ASTM D1238.

### <Amount of fluorine compound>

The amount of a fluorine compound was measured by liquid chromatography mass spectrometry under the following conditions.

### Extraction from powder

To a 1-g portion of the powder was added 10 g (12.6 mL) of methanol, followed by ultrasonication at 60°C for 120 minutes, whereby a supernatant solution containing a fluorine compound was extracted.

### Calibration curve for perfluorooctanoic acid

Methanol standard solutions having five different known levels from 1 ng/mL to 100 ng/mL of perfluorooctanoic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation (1).

$$A = a \times X + b \quad (1)$$

A: Peak area of perfluorooctanoic acid
X: Concentration (ng/mL) of perfluorooctanoic acid

Instrument configuration and LC-MS measurement conditions

[Table 1]

| | | |
|---|---|---|
| LC system | | |
| Device | Acquity UPLC from Waters | |
| Column | Acquity UPLC BEH C18 1.7 mm (2.1 × 50 mm) from Waters | |
| Mobile phase | A $CH_3CN$ | |
| | B 20 mM $CH_3COONH_4/H_2O$ | |
| | 0 → 1.5 min | A:B = 10:90 |
| | 1.5 → 8.5 min | A:B = 10:90 → A:B = 90:10 Linear gradient |
| | 8.5 → 10 min | A:B = 90:10 |
| Flow rate | 0.4 mL/min | |
| Column temperature | 40°C | |
| Sample injection amount | 5 μL | |
| MS system | | |
| Device | TQ Detecter | |
| Measurement mode | MRM (Multiple Reaction Monitoring) | |
| Ionization method | Electrospray ionization<br>Negative mode | |

[Table 2]

| Compound | Precursor | Product |
|---|---|---|
| Perfluorooctanoic acid | 413 | 369 |

Amount of compound represented by formula (1) containing 4 to 20 carbon atoms in extract

The amount of the compound represented by the formula (1) containing 4 to 20 carbon atoms was determined using a liquid chromatograph-mass spectrometer. For the extracted liquid phase, the peak areas of the compounds represented by the formula (1) with respective numbers of carbon atoms were determined by the MRM method.

Calibration curve for perfluorocarboxylic acid

Methanol standard solutions having five different known levels from 1 ng/mL to 100 ng/mL of a perfluorocarboxylic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation.

$$A = a \times X + b$$

A: Peak area of perfluorocarboxylic acid
X: Concentration (ng/mL) of perfluorocarboxylic acid

Instrument configuration and LC-MS measurement conditions

[Table 3]

| LC system | | | |
|---|---|---|---|
| | Device | Acquity UPLC from Waters | |
| | Column | Acquity UPLC BEH C18 1.7 mm (2.1 × 50 mm) from Waters | |
| | Mobile phase | A $CH_3CN$ | |
| | | B 20 mM $CH_3COONH_4/H_2O$ | |
| | | 0 → 1.5 min | A:B = 10:90 |
| | | 1.5 → 8.5 min | A:B = 10:90 → A:B = 90:10 Linear gradient |
| | | 8.5 → 10 min | A:B = 90:10 |
| | Flow rate | 0.4 mL/min | |
| | Column temperature | 40°C | |
| | Sample injection amount | 5 μL | |
| MS system | | | |
| | Device | TQ Detecter | |
| | Measurement mode | MRM (Multiple Reaction Monitoring) | |
| | Ionization method | Electrospray ionization<br>Negative mode | |

MRM measurement parameter

[Table 4]

| Compound | Precursor | Product |
|---|---|---|
| Perfluorobutaonic acid | 213 | 169 |
| Perfluoropentanoic acid | 263 | 219 |
| Perfluorohexanoic acid | 313 | 269 |
| Perfluoroheptanoic acid | 363 | 319 |
| Perfluorooctanoic acid | 413 | 369 |
| Perfluorononanic acid | 463 | 419 |
| Perfluorodecanoic acid | 513 | 469 |
| Perfluoroundecanoic acid | 563 | 519 |
| Perfluoronodecanoic acid | 613 | 569 |
| Perfluorotridecanoic acid | 663 | 619 |
| Perfluorotetradecanoic acid | 713 | 669 |

Amount of perfluorocarboxylic acid and its salt

The amount of a perfluorocarboxylic acid and its salt was measured using a liquid chromatograph-mass spectrometer (Waters, LC-MS ACQUITY UPLC/TQD). The extracted liquid phase was analyzed by multiple reaction monitoring (MRM).

The quantitation limit in this measurement is 1 ng/mL.

In the examples, the amounts of C4-C14 perfluorocarboxylic acids and their salts were calculated, and the total amount thereof was determined.

Amount of compound represented by formula (1)

The amount of the compound represented by the formula (1) containing (m + 1) carbon atoms in the extract was calculated using the following equation. The values of a and b in the equation were determined using the relational equation described for Calibration curve for perfluorocarboxylic acid. In the examples, the amounts of C4-C21 compounds were calculated, and the total amount thereof was determined.

$$XCm = ((ACm - b)/a) \times ((50 \times m + 45)/413)$$

XCm: Amount (ng/mL) of compound represented by formula (1) containing (m + 1) carbon atoms in extract
ACm: Peak area of compound represented by formula (1) containing (m + 1) carbon atoms in extract

The quantitation limit in this measurement is 1 ng/mL.

Measurement of amount of compound represented by formula (1) in extract

The amount of the compound represented by the formula (1) contained in the extract was obtained by conversion to perfluorooctanoic acid.

Calibration curve for perfluorooctanoic acid

The calibration curve was obtained as in Calibration curve for perfluorocarboxylic acid.

Amount of compound represented by formula (1) containing 4 to 21 carbon atoms in extract

The amount of the compound represented by the formula (1) containing 4 to 21 carbon atoms was determined using a liquid chromatograph-mass spectrometer. For the extracted liquid phase, the peak areas of the compounds represented by the formula (1) with respective numbers of carbon atoms were determined by the MRM method.

MRM measurement parameter

[Table 5]

| Compound | Carbon number | Precursor | Product |
|---|---|---|---|
| $(H-(CF_2)_3-COO)M$ | 4 | 195 | 131 |
| $(H-(CF_2)_4-COO)M$ | 5 | 245 | 181 |
| $(H-(CF_2)_5-COO)M$ | 6 | 295 | 231 |
| $(H-(CF_2)_6-COO)M$ | 7 | 345 | 281 |
| $(H-(CF_2)_7-COO)M$ | 8 | 395 | 331 |
| $(H-(CF_2)_8-COO)M$ | 9 | 445 | 381 |
| $(H-(CF_2)_9-COO)M$ | 10 | 495 | 431 |
| $(H-(CF_2)_{10}-COO)M$ | 11 | 545 | 481 |
| $(H-(CF_2)_{11}-COO)M$ | 12 | 595 | 531 |
| $(H-(CF_2)_{12}-COO)M$ | 13 | 645 | 581 |
| $(H-(CF_2)_{13}-COO)M$ | 14 | 695 | 631 |
| $(H-(CF_2)_{14}-COO)M$ | 15 | 745 | 681 |
| $(H-(CF_2)_{15}-COO)M$ | 16 | 795 | 731 |
| $(H-(CF_2)_{16}-COO)M$ | 17 | 845 | 781 |
| $(H-(CF_2)_{17}-COO)M$ | 18 | 895 | 831 |
| $(H-(CF_2)_{18}-COO)M$ | 19 | 945 | 881 |
| $(H-(CF_2)_{19}-COO)M$ | 20 | 995 | 931 |
| $(H-(CF_2)_{20}-COO)M$ | 21 | 1045 | 981 |

The amount of the compound represented by the formula (1) containing (m + 1) carbon atoms in the powder was determined using the following equation.

$$YCm = XCm \times 12.6$$

Ycm: Amount of compound represented by formula (1) containing (m + 1) carbon atoms in powder (ppb relative to

PTFE)

Amount of compound represented by formula (2)

The amount of the compound represented by the formula (2) containing n carbon atoms in the extract was calculated using the following equation. The values of a and b in the equation were determined using the relational equation described for Calibration curve for perfluorooctanoic acid.

In the examples, the amounts of C4-C21 compounds were calculated, and the total amount thereof was determined.

$$XSn = ((ASn - b)/a) \times ((50 \times n + 81)/499)$$

XSn: Amount (ng/mL) of compound represented by formula (2) containing n carbon atoms in extract
ASn: Peak area of compound represented by formula (2) containing n carbon atoms in extract

The quantitation limit in this measurement is 1 ng/mL.

Measurement of amount of compound represented by formula (2) in extract

The amount of the compound represented by the formula (2) contained in the extract was obtained by conversion to perfluorooctanesulfonic acid.

Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation (2).

$$A = a \times X + b \quad (2)$$

A: Peak area of perfluorooctanesulfonic acid
X: Concentration (ng/mL) of perfluorooctanesulfonic acid

Instrument configuration and LC-MS measurement conditions

[Table 6]

| | | |
|---|---|---|
| LC system | | |
| Device | Acquity UPLC from Waters | |
| Column | Acquity UPLC BEH C18 1.7 mm (2.1 × 50 mm) from Waters | |
| Mobile phase | A $CH_3CN$ | |
| | B 20 mM $CH_3COONH_4/H_2O$ | |
| | 0 → 1.5 min | AB = 10:90 |
| | 1.5 → 8.5 min | AB = 10:90 → A:B = 90:10 Linear gradient |
| | 8.5 → 10 min | AB = 90:10 |
| Flow rate | 0.4 mL/min | |
| Column temperature | 40°C | |
| Sample injection amount | 5 μL | |
| MS system | | |
| Device | TQ Detecter | |
| Measurement mode | MRM (Multiple Reaction Monitoring) | |

(continued)

| MS system | |
|---|---|
| Ionization method | Electrospray ionization<br>Negative mode |

MRM measurement parameter

[Table 7]

| Compound | Precursor | Product |
|---|---|---|
| Perfluorooctanesulfonic acid | 499 | 99 |

Amount of compound represented by formula (2) containing 4 to 21 carbon atoms in extract

The amount of the compound represented by the formula (2) containing 4 to 21 carbon atoms was determined using a liquid chromatograph-mass spectrometer. For the extracted liquid phase, the peak areas of the compounds represented by the formula (2) with respective numbers of carbon atoms were determined by the MRM method.

MRM measurement parameter

[Table 8]

| Com pound | Carbon number | Precursor | Product |
|---|---|---|---|
| $(H-(CF_2)_4-SO_3)M$ | 4 | 281 | 99 |
| $(H-(CF_2)_5-SO_3)M$ | 5 | 331 | 99 |
| $(H-(CF_2)_6-SO_3)M$ | 6 | 381 | 99 |
| $(H-(CF_2)_7-SO_3)M$ | 7 | 431 | 99 |
| $(H-(CF_2)_8-SO_3)M$ | 8 | 481 | 99 |
| $(H-(CF_2)_9-SO_3)M$ | 9 | 531 | 99 |
| $(H-(CF_2)_{10}-SO_3)M$ | 10 | 581 | 99 |
| $(H-(CF_2)_{11}-SO_3)M$ | 11 | 631 | 99 |
| $(H-(CF_2)_{12}-SO_3)M$ | 12 | 681 | 99 |
| $(H-(CF_2)_{13}-SO_3)M$ | 13 | 731 | 99 |
| $(H-(CF_2)_{14}-SO_3)M$ | 14 | 781 | 99 |
| $(H-(CF_2)_{15}-SO_3)M$ | 15 | 831 | 99 |
| $(H-(CF_2)_{16}-SO_3)M$ | 16 | 881 | 99 |
| $(H-(CF_2)_{17}-SO_3)M$ | 17 | 931 | 99 |
| $(H-(CF_2)_{18}-SO_3)M$ | 18 | 981 | 99 |
| $(H-(CF_2)_{19}-SO_3)M$ | 19 | 1031 | 99 |
| $(H-(CF_2)_{20}-SO_3)M$ | 20 | 1081 | 99 |
| $(H-(CF_2)_{21}-SO_3)M$ | 21 | 1131 | 99 |

The amount of the compound represented by the formula (2) containing n carbon atoms in the powder was determined using the following equation.

$$YSn = XSn \times 12.6$$

YSn: Amount of compound represented by formula (2) containing n carbon atoms in powder (ppb relative to PTFE)

<Measurement by electron spin resonance (ESR)>

Measurement was performed under the following conditions. Based on the obtained ESR spectrum, the intensity of the peak at a g value of 2.0218 was determined.

Device: JES-FR30EX available from Jeol Ltd.
Measurement temperature: 23 ± 3°C.
Microwave frequency: 9.42 GHz
Microwave output: 0.4 mW
Center field: 347.548 mT
Sweep width: ±25 mT
Sweep time: 60 s
Time constant: 0.03 s
Field modulation width: 0.32 mT
Number of scans: 1
Modulation frequency: 100 kHz
Marker: $Mn^{2+}$

Synthesis Example 1 (synthesis of low-molecular-weight PTFE aqueous dispersion)

A low-molecular-weight PTFE aqueous dispersion was obtained in conformity with Example 5 of JP 5338667 B.

Comparative Example 1

To 660 g of the low-molecular-weight PTFE aqueous dispersion was added 14.7 g of nitric acid, to which intense mechanical shear force was applied to cause coagulation. The resulting wet powder was separated by filtration and washed with 750 g of pure water. This washing operation was repeated five times, and the resulting powder was dried in a hot-air circulating dryer at 150°C for 18 hours, whereby a low-molecular-weight PTFE powder was obtained.

Comparative Example 2

A low-molecular-weight PTFE powder was obtained as in Comparative Example 1, except that the drying temperature (heating temperature) was set to 160°C.

Example 1

A low-molecular-weight PTFE powder was obtained as in Comparative Example 1, except that the drying temperature was set to 170°C.

Example 2

A low-molecular-weight PTFE powder was obtained as in Comparative Example 1, except that the drying temperature was set to 180°C.

Example 3

A low-molecular-weight PTFE powder was obtained as in Comparative Example 1, except that the drying temperature was set to 200°C.

Example 4

A low-molecular-weight PTFE powder was obtained as in Comparative Example 1, except that the drying temperature was set to 210°C.

Example 5

A low-molecular-weight PTFE powder was obtained as in Comparative Example 1, except that the drying temperature was set to 230°C.

Example 6

A low-molecular-weight PTFE powder was obtained as in Comparative Example 1, except that the drying temperature was set to 240°C.

The resulting low-molecular-weight PTFE powders were evaluated by the above methods. The results are shown in Table 9.

[Table 9]

| | | Comparative Example 1 | Comparative Example 2 | Example 1 | Example 2 | Example 3 | Example 4 | Example 5 | Example 6 |
|---|---|---|---|---|---|---|---|---|---|
| Heating temperature | °C | 150 | 160 | 170 | 180 | 200 | 210 | 230 | 240 |
| Average particle size | μm | 2.4 | 2.5 | 2.5 | 2.9 | 3.6 | 4.8 | 8.3 | 9.0 |
| Apparent density | g/ml | 0.45 | 0.44 | 0.44 | 0.44 | 0.42 | 0.43 | 0.44 | 0.47 |
| Melt viscosity | Pa·s | 22000 | 22000 | 23000 | 22000 | 23000 | 23000 | 22000 | 22000 |
| Amount of perfluorocarboxylic acid and its salt | ppb | Below quantitation limit | Below quantitation limit | Below quantitation limit | Below quantitation limit | Below quantitation limit | Below quantitation limit | Below quantitation limit | Below quantitation limit |
| Amount of compound represented by formula (1) | ppb | 193 | 180 | 129 | 116 | 66 | Below quantitation limit | Below quantitation limit | Below quantitation limit |
| Amount of compound represented by formula (2) | ppb | Below quantitation limit | Below quantitation limit | Below quantitation limit | Below quantitation limit | Below quantitation limit | Below quantitation limit | Below quantitation limit | Below quantitation limit |
| Intensity of peak at g = 2.0218 | $g^{-1}$ | 6.35 | 5.40 | 6.58 | 5.07 | 2.24 | 0.00 | 0.40 | 0.05 |

## Claims

1. A method for producing a refined polytetrafluoroethylene powder, comprising a step of reducing a short-chain fluorine compound from a low-molecular weight polytetrafluoroethylene powder obtained by radical polymerization, the step including at least reducing a compound represented by the following formula (1) to 179 ppb or less and a compound represented by the following formula (2) to 6900 ppb or less:

Formula (1): $(H-(CF_2)_m-COO)_pM^1$

wherein m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (2) : $(H-(CF_2)_n-SO_3)_qM^2$

wherein n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

2. The method for producing a refined polytetrafluoroethylene powder according to claim 1, wherein the radical polymerization includes use of a fluorosurfactant other than perfluorooctanoic acid and its salt.

3. The method for producing a refined polytetrafluoroethylene powder according to claim 1 or 2, wherein the radical polymerization includes use of a hydrocarbon chain transfer agent.

4. The method for producing a refined polytetrafluoroethylene powder according to any one of claims 1 to 3, wherein the radical polymerization is emulsion polymerization.

5. The method for producing a refined polytetrafluoroethylene powder according to any one of claims 1 to 4, wherein the short-chain fluorine compound is reduced by heating at 170°C or higher.

6. The method for producing a refined polytetrafluoroethylene powder according to any one of claims 1 to 5, wherein the low-molecular-weight polytetrafluoroethylene powder has a melt viscosity of $1 \times 10^2$ to $7 \times 10^5$ Pa·s at 380°C.

7. The method for producing a refined polytetrafluoroethylene powder according to any one of claims 1 to 6, wherein the step further includes reducing a perfluorocarboxylic acid and its salt to below a quantitation limit.

8. The method for producing a refined polytetrafluoroethylene powder according to claim 7, wherein the perfluorocarboxylic acid is a perfluorocarboxylic acid other than perfluorooctanoic acid.

9. A low-molecular-weight polytetrafluoroethylene powder having an intensity of a peak at a g value of 2.0218 of 0 $g^{-1}$ or more and 7 $g^{-1}$ or less in a primary differential spectrum obtainable by electron spin resonance, wherein an amount of a perfluorocarboxylic acid and its salt is below a quantitation limit, an amount of a compound represented by the following formula (1) is 179 ppb or less, and an amount of a compound represented by the following formula (2) is 6900 ppb or less:

Formula (1): $(H-(CF_2)_m-COO)_pM^1$

wherein m is 3 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (2) : $(H-(CF_2)_n-SO_3)_qM^2$

wherein n is 4 to 21; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

**10.** The low-molecular-weight polytetrafluoroethylene powder according to claim 9,
wherein the low-molecular-weight polytetrafluoroethylene powder has an average particle size of 20 um or smaller and an apparent density of 0.6 g/ml or lower.

**11.** The low-molecular-weight polytetrafluoroethylene powder according to claim 9 or 10,
wherein the low-molecular-weight polytetrafluoroethylene powder has a melt viscosity of $1 \times 10^2$ to $7 \times 10^5$ Pa·s at 380°C.

## INTERNATIONAL SEARCH REPORT

International application No.
**PCT/JP2023/014951**

**A. CLASSIFICATION OF SUBJECT MATTER**

***C08F 6/00***(2006.01)i; ***C08F 14/26***(2006.01)i
FI: C08F6/00; C08F14/26

According to International Patent Classification (IPC) or to both national classification and IPC

**B. FIELDS SEARCHED**

Minimum documentation searched (classification system followed by classification symbols)

C08F6/00; C08F14/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/213691 A1 (DAIKIN INDUSTRIES, LTD.) 22 October 2020 (2020-10-22) claims, paragraphs [0041]-[0042], [0509]-[0524], examples | 1-11 |
| Y | | 1-11 |
| X | WO 2021/053531 A1 (GUJARAT FRUOROCHEMICALS LIMITED) 25 March 2021 (2021-03-25) claims, pp. 15-16, examples | 1-5, 7-10 |
| Y | | 1-11 |
| X | WO 2019/031617 A1 (DAIKIN INDUSTRIES, LTD.) 14 February 2019 (2019-02-14) claims, paragraphs [0035], [0060], examples | 1-11 |
| Y | | 1-11 |
| Y | JP 2010-180364 A (DAIKIN INDUSTRIES, LTD.) 19 August 2010 (2010-08-19) claims, paragraphs [0041], [0084], [0103], examples | 1-11 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 May 2023** | **13 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/014951**

| Patent document cited in search report | Publication date (day/month/year) | Patent family member(s) | Publication date (day/month/year) |
|---|---|---|---|
| WO 2020/213691 A1 | 22 October 2020 | US 2022/0315713 A1<br>claims, paragraphs [0091]-[0092], [0971]-[0989], examples<br>EP 3957656 A1<br>CN 113661184 A | |
| WO 2021/053531 A1 | 25 March 2021 | GB 2604463 A<br>EP 4031589 A1<br>CN 114450317 A<br>KR 10-2022-0065003 A | |
| WO 2019/031617 A1 | 14 February 2019 | US 2020/0255551 A1<br>claims, paragraphs [0105], [0153]-[0154], examples<br>EP 3666802 A1<br>CN 110997735 A | |
| JP 2010-180364 A | 19 August 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10147617 A
- WO 2020218622 A
- JP 5338667 B